# EUROPEAN PATENT APPLICATION

(11) **EP 2 793 522 A1**
(43) Date of publication of application: **22.10.2014**
(21) Application number: 13788111.6
(22) Date of filing: 18.04.2013
(51) Int. Cl.: H04W 72/04, H04W 56/00

(54) **MOBILE STATION AND WIRELESS BASE STATION**

(30) Priority: 10.05.2012 JP 2012108515
(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); YAGYU, Kengo, Tokyo 100-6150 (JP); SAGAE, Yuta, Tokyo 100-6150 (JP); KIYOSHIMA, Kohei, Tokyo 100-6150 (JP); TAKIGUCHI, Takahiro, Tokyo 100-6150 (JP)
(74) Representative: HOFFMANN EITLE
(86) International application number: PCT/JP2013/061515
(87) International publication number: WO 2013/168533

(57) **Abstract**

A mobile station (UE) according to the present invention includes a control unit (12) configured to deactivate Scell #2 when the mobile station (UE) is instructed to modify a TAG, to which the Scell #2 belongs, from TAG #2 to TAG #1.

## Description

### Technical Field

The present invention relates to a mobile station and a radio base station.

### Background Art

A mobile communication system compatible with an LTE (Long Term Evolution) -Advanced scheme can perform a CA (Carrier Aggregation) by using a Pcell (Primary Cell) being a serving cell in a PCC (Primary Component Carrier) and a Scell (Secondary Cell) being a serving cell in an SCC (Secondary Component Carrier).

The Scell can take an active state and an inactive state. When the Scell is transitioned to the inactive state, the mobile station UE can stop transmission and reception in the corresponding Scell. This can realize a battery saving of the mobile station UE.

Also, the mobile communication system compatible with the LTE-Advanced scheme is configured to perform TA (Timing Advance) control.

Specifically, in the TA control, a radio base station eNB is configured to instruct a TA value to each of a plurality of mobile stations UE so as to match reception timings (FFT timings) of received signals from the plurality of mobile stations UE, and each of the mobile stations UE is configured to adjust a transmission timing of an uplink signal based on the instructed TA value.

For example, the radio base station eNB transmits an uplink signal to a mobile station UE located at a cell edge at a faster timing than a mobile station UE located at a cell center.

Also, when inter-band CC (UL CC) is performed in cells of different frequencies, radio characteristics (delay characteristic or attenuation characteristics) are different in each cell. Herein, for cells having different radio characteristics, it is necessary to perform the TA control according to each radio characteristic.

Specifically, the mobile communication system compatible with the LTE-Advanced scheme is configured such that, when inter-band CC is performed, the Pcell and the Scell are grouped into a group (TAG: Timing Advance Group) having an equivalent radio characteristic, and the TA control is performed in each group.

Such a TA control is referred to as a "Multiple Timing Advances (MTA) control". Also, in such a group, there are two types: pTAG including the Pcell and sTAG including only the Scell.

Also, the Pcell and the Scell belonging to the same TAG share a TA value (and a UL signal transmission timing), a TAT (Time Alignment Timer), and a "DL Timing Reference Cell".

Incidentally, the TAT is a timer that determines whether uplink synchronization is achieved in the Pcell and the Scell within the TAG. The mobile station UE is configured to adjust a transmission timing of an uplink signal in the Pcell and the Scell within the TAG according to a reception timing of a downlink signal in the "DL Timing Reference Cell".

Herein, when the Scell set to the mobile station UE is not mapped into an appropriate TAG (for example, when the UL transmission timing differs greatly between the Pcell and the Scell within the same TAG), the radio base station eNB needs to map the corresponding Scell into an appropriate TAG.

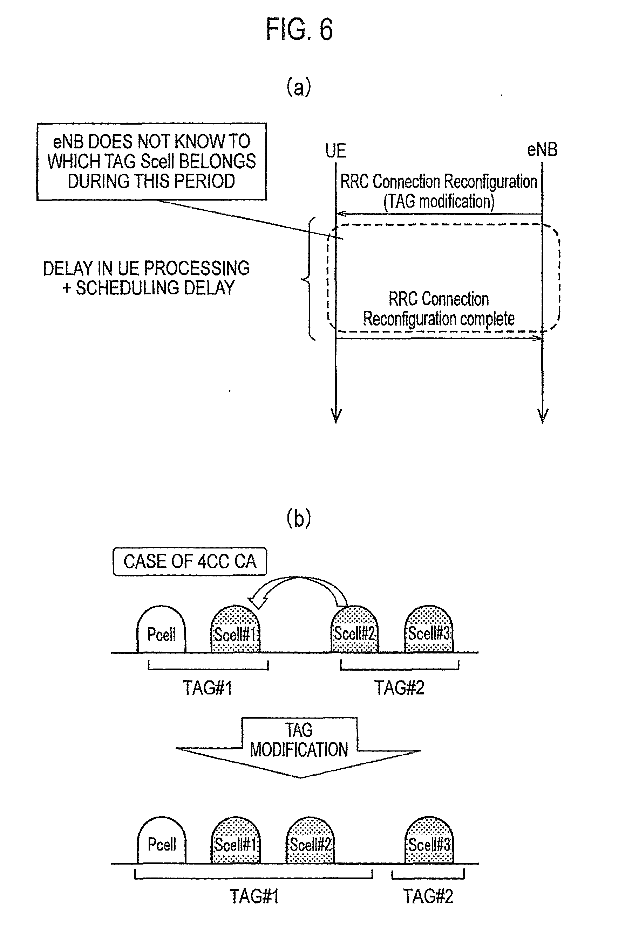

The configuration and modification of the mapping of the TAG and the Scell are performed using an "RRC Connection Reconfiguration procedure" as illustrated in Figs. 6(a) and 6(b).

### Citation List

### Non-Patent Literature

Non-Patent literature 1: 3GPP Contribution R2-116503

### Summary of Invention

However, while the procedure of modifying the mapping of the TAG and the Scell, that is, the "RRC Connection Reconfiguration procedure" is performed, the mobile station UE can transmit the uplink signal in the Scell.

For example, as illustrated in Fig. 6(b), when a TAG to which Scell #2 belongs is modified from TAG #2 to TAG #1, while such a modification procedure is performed, the radio base station eNB does not know that the mobile station UE determines that the Scell #2 belongs to either the TAG #1 or the TAG #2 and transmit the uplink signal.

Therefore, upon transmission and reception of the uplink signal in the Scell #2, as a result of using different TA values (and UL signal transmission timings), TAT, and "DL Timing Reference Cell" between the mobile station UE and the radio base station eNB, there has been a problem that the radio base station eNB cannot receive the uplink signal from the mobile station UE in the Scell #2, and such an uplink signal may become interference with respect to another uplink signal.

Therefore, the present invention has been made in view of the above problems and is directed to provide a mobile station and a radio base station which can solve the above problems in the procedure of modifying the mapping of TAG and Scell.

According to a first feature of the present invention, there is provided a mobile station, which is configured to be capable of performing carrier aggregation using a primary cell and a secondary cell, the mobile station including: a control unit configured to deactivate a target secondary cell when it is instructed to modify a timing advance group, to which the target secondary cell belongs, from a first timing advance group to a second timing advance group.

According to a second feature of the present invention, there is provided a mobile station, which is configured to be capable of performing carrier aggregation using a primary cell and a secondary cell, the mobile station including: a transmission unit configured such that an uplink signal is not transmitted in a secondary cell belonging to a timing advance group in which a time alignment timer is stopped; and a control unit configured to stop a time alignment timer of at least one of a first timing advance group and a second timing advance group when it is instructed to modify a timing advance group, to which a target secondary cell belongs, from the first timing advance group to the second timing advance group.

According to a third feature of the present invention, there is provided a radio base station, which is used in a mobile communication system configured such that a mobile station is capable of performing carrier aggregation using a primary cell and a secondary cell, the radio base station including: a control unit configured to deactivate a target secondary cell before instructing the mobile station to modify a timing advance group, to which the target secondary cell belongs, from a first timing advance group to a second timing advance group.

According to a fourth feature of the present invention, there is provided a radio base station, which is used in a mobile communication system configured such that a mobile station is capable of performing carrier aggregation using a primary cell and a secondary cell, the radio base station including: a control unit configured to instruct the mobile station to perform handover when instructing the mobile station to modify a timing advance group, to which a target secondary cell belongs, from a first timing advance group to a second timing advance group.

According to a fifth feature of the present invention, there is provided a radio base station, which is used in a mobile communication system configured such that a mobile station is capable of performing carrier aggregation using a primary cell and a secondary cell, the radio base station including: a control unit configured to stop scheduling in a target secondary cell when instructing the mobile station to modify a timing advance group, to which the target secondary cell belongs, from a first timing advance group to a second timing advance group.

According to a sixth feature of the present invention, there is provided a mobile station, which is configured to be capable of performing carrier aggregation using a primary cell and a secondary cell, the mobile station including: a control unit configured to stop uplink transmission in a target secondary cell when it is instructed to modify a timing advance group, to which the target secondary cell belongs, from a first timing advance group to a second timing advance group.

### Brief Description of Drawings

Fig. 1 is an overall configuration diagram of a mobile communication system according to a first embodiment of the present invention.
Fig. 2 is a functional block diagram of a mobile station according to the first embodiment of the present invention.
Fig. 3 is a flowchart for describing an operation of the mobile station according to the first embodiment of the present invention.
Fig. 4 is a functional block diagram of a radio base station according to a second embodiment of the present invention.
Fig. 5 is a flowchart for describing an operation of the radio base station according to the second embodiment of the present invention.
Fig. 6 is a diagram for describing a conventional mobile communication system.

### Description of Embodiments

### (Mobile communication system according to first embodiment of the present invention)

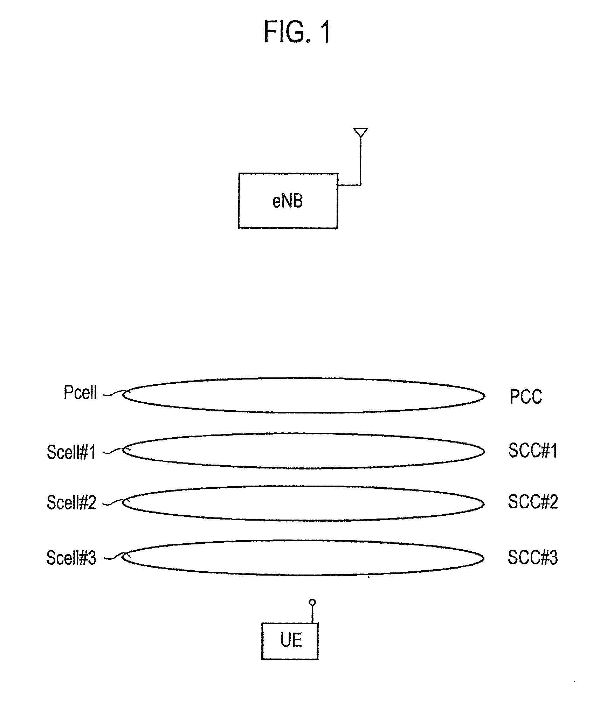

A mobile communication system according to a first embodiment of the present invention will be described with reference to Figs. 1 to 3.

The mobile communication system according to the present embodiment supports the LTE-Advanced scheme and is configured to be capable of performing a CA using Pcell and Scell.

Specifically, the mobile communication system according to the present embodiment is configured to be capable of performing "inter-band CA".

As illustrated in Fig. 1, the mobile communication system according to the present embodiment includes a radio base station eNB that manages a PCC and Scells #1 to #3 of a mobile station UE.

Incidentally, a Pcell is a serving cell in the PCC, the Scell #1 is a serving cell in an SCC #1, the Scell #2 is a serving cell in an SCC #2, and the Scell #3 is a serving cell in an SCC #3.

Incidentally, in the present embodiment, as illustrated in Fig. 6(b), a case where a TAG to which the Scell #2 belongs is modified from TAG #2 to TAG #1 in a state in which the mobile station UE performs a CA using the Pcell and the Scells #1 to #4 will be described as an example.

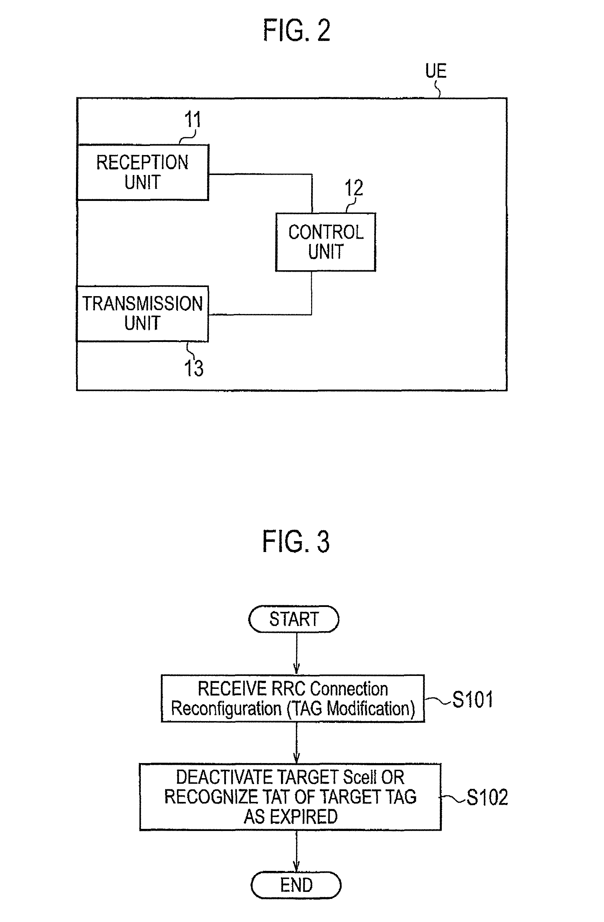

As illustrated in Fig. 2, the mobile station UE according to the present embodiment includes a reception unit 11, a control unit 12, and a transmission unit 13.

The reception unit 11 is configured to receive various signals from the radio base station eNB. The transmission unit 13 is configured to transmit various signals to the radio base station eNB. The control unit 12 is configured to perform various controls.

For example, the reception unit 11 is configured to receive an "RRC Connection Reconfiguration (TAG modification)" from the radio base station eNB. The "RRC Connection Reconfiguration (TAG modification)" instructs the TAG, to which the Scell #2 belongs, to be modified from TAG #2 to TAG #1.

Incidentally, when it is instructed to modify the TAG, to which the Scell #2 belongs, from TAG #2 to TAG #1, for example, when the "RRC Connection Reconfiguration (TAG modification)" is received, the control unit 12 may modify the TAG, to which the Scell #2 belongs, from TAG #2 to TAG #1 and simultaneously deactivate the Scell #2.

According to such a configuration, while the procedure of modifying the TAG, to which the Scell #2 belongs, from TAG #2 to TAG #1 is performed, the mobile station UE cannot transmit the uplink signal in the Scell #2. Therefore, it is possible to avoid the occurrence of interference with respect to another uplink signal.

Alternatively, when it is instructed to modify the TAG, to which the Scell #2 belongs, from TAG #2 to TAG #1, for example, when the above-described "RRC Connection Reconfiguration (TAG modification) " is received, the control unit 12 may modify the TAG, to which the Scell #2 belongs, from TAG #2 to TAG #1 and simultaneously stop the TAT in at least one of TAG #1 and TAG #2.

Herein, the control unit 12 may be configured to recognize such a TAT as having expired and perform subsequent processing, instead of actually stopping the above-described TAT.

The case where the control unit 12 performs a special control such as handover or deactivation of the Scell has been described above. However, when instructing to modify the TAG, to which the Scell #2 belongs, from TAG #2 to TAG #1, the control unit 12 may be configured to simply stop uplink transmission in the Scell #2.

However, in such a case, the mobile station UE may be configured to designate a trigger to resume the Scell #2 after the TAG, to which the Scell #2 belongs, is modified from TAG #2 to TAG #1.

Such a trigger may be a control signal from the radio base station eNB, or may be a delivery confirmation signal from the radio base station eNB with respect to a notification signal of TAG modification procedure completion transmitted from the mobile station UE.

Furthermore, the control signal or the delivery confirmation signal may be transmitted in a physical layer, or may be transmitted in any of an upper RLC layer, a PDCP layer, and an RRC layer.

According to such a configuration, while the procedure of modifying the TAG, to which the Scell #2 belongs, from TAG #2 to TAG #1 is performed, the mobile station UE determines that the TAT of the TAG (TAG #1 or TAG #2) to which the Scell #2 belongs is stopped, that is, determines that the uplink synchronization in the Scell #2 is deviated, and thus, the mobile station UE cannot transmit the uplink signal in the Scell #2. This makes it possible to avoid the occurrence of interference with respect to another uplink signal.

Also, when the control unit 12 completes the procedure of modifying the TAG, to which the Scell #2 belongs, from TAG #2 to TAG #1 as described above, the transmission unit 13 is configured to transmit an "RRC Connection Reconfiguration Complete" to the radio base station eNB.

Hereinafter, the operation of the mobile station UE according to the present embodiment will be described with reference to Fig. 3.

As illustrated in Fig. 3, in step S101, the mobile station UE receives an "RRC Connection Reconfiguration (TAG modification)" from the radio base station eNB.

In step S102, the mobile station UE modifies the mapping of the TAG and the Scell, which is instructed by the "RRC Connection Reconfiguration (TAG modification)", and deactivates the Scell to be modified.

Alternatively, in step S102, the mobile station UE modifies the mapping of the TAG and the Scell, which is instructed by the "RRC Connection Reconfiguration (TAG modification)", and recognizes that the TAT of at least one of the TAG to which the Scell to be modified belongs before modification and the TAG to which the Scell to be modified will belong after modification has expired.

According to the invention of the present embodiment, while the procedure of modifying the TAG, to which the Scell #2 belongs, from TAG #2 to TAG #1 is performed, it is possible to avoid a situation where the radio base station eNB cannot receive the uplink signal from the mobile station UE in the Scell #2, and such an uplink signal becomes interference with respect to another uplink signal, which is occurred as a result of using different TA values, TAT, and "DL Timing Reference Cell" between the mobile station UE and the radio base station eNB upon transmission and reception of the uplink signal in the Scell #2.

### (Second Embodiment)

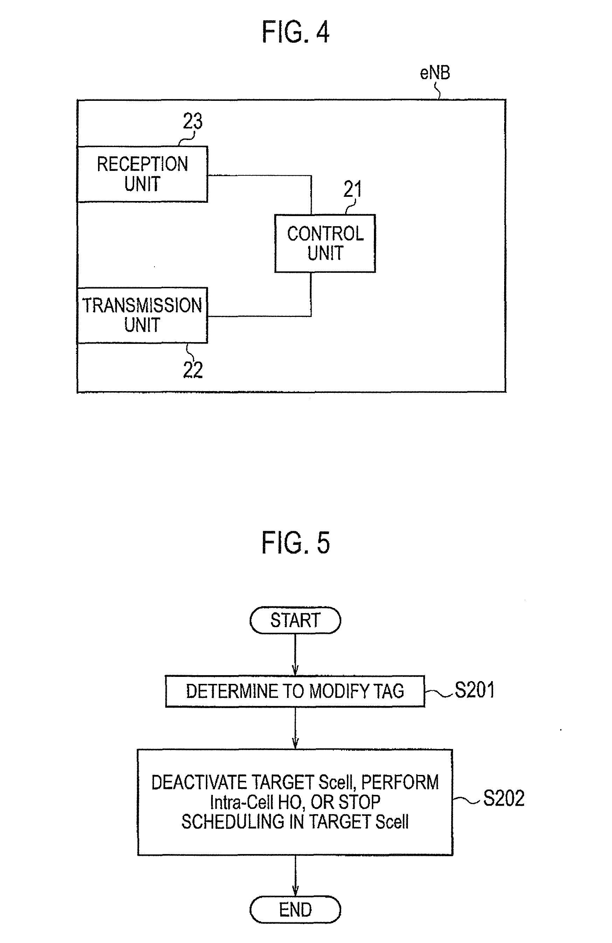

Hereinafter, a mobile communication system according to a second embodiment of the present invention will be described with reference to Figs. 4 and 5, focusing on differences from the above-described mobile communication system according to the first embodiment.

As illustrated in Fig. 4, in the mobile communication system according to the present embodiment, a radio base station eNB includes a control unit 21, a transmission unit 22, and a reception unit 23.

The transmission unit 22 is configured to transmit various signals to the mobile station UE. The reception unit 23 is configured to receive various signals from the mobile station UE. The control unit 21 is configured to perform various controls.

When determining to modify the TAG, to which the Scell #2 of the mobile station UE belongs, from TAG #2 to TAG #1, the control unit 21 may be configured to deactivate the Scell #2 before instructing the mobile station UE to modify the TAG, to which the Scell #2 belongs, from TAG #2 to TAG #1.

According to such a configuration, while the procedure of modifying the TAG, to which the Scell #2 belongs, from TAG #2 to TAG #1 is performed, the mobile station UE cannot transmit the uplink signal in the Scell #2. Therefore, it is possible to avoid the occurrence of interference with respect to another uplink signal.

Alternatively, when determining to modify the TAG, to which the Scell #2 of the mobile station UE belongs, from TAG #2 to TAG #1, that is, when instructing the mobile station UE to modify the TAG, to which the Scell #2 belongs, from TAG #2 to TAG #1, the control unit 21 may be configured to instruct the mobile station UE to perform handover.

When the handover is performed, all Scells are deactivated. Thus, while the procedure of modifying the TAG, to which the Scell #2 belongs, from TAG #2 to TAG #1, the mobile station UE cannot transmit the uplink signal in the Scell #2. This makes it possible to avoid the occurrence of interference with respect to another uplink signal.

Alternatively, when determining to modify the TAG, to which the Scell #2 of the mobile station UE belongs, from TAG#2 to TAG #1, that is, when instructing the mobile station UE to modify the TAG, to which the Scell #2 belongs, from TAG #2 to TAG #1, the control unit 21 may be configured to stop scheduling in the Scell #2.

According to such a configuration, while the procedure of modifying the TAG, to which the Scell #2 belongs, from TAG #2 to TAG #1 is performed, the mobile station UE cannot transmit the uplink signal in the Scell #2. Therefore, it is possible to avoid the occurrence of interference with respect to another uplink signal.

Incidentally, when determining to modify the TAG, to which the Scell #2 of the mobile station UE belongs, from TAG#2 to TAG #1, the control unit 21 may be configured to deconfigure a Sounding Reference Symbol (SRS) transmitted by the mobile station UE before instructing the mobile station UE to modify the TAG, to which the Scell #2 belongs, from TAG #2 to TAG #1.

When the control unit 21 determines to modify the TAG, to which the Scell #2 of the mobile station UE belongs, from TAG#2 to TAG #1, the transmission unit 22 is configured to transmit an "RRC Connection Reconfiguration (TAG modification)" that instructs the mobile station UE to modify the TAG, to which the Scell #2 belongs, from TAG #2 to TAG #1.

Also, the reception unit 23 is configured to receive, from the mobile station UE, an "RRC Connection Reconfiguration Complete" that indicates the completion of the procedure of modifying the TAG, to which the Scell #2 belongs, from TAG #2 to TAG #1.

Hereinafter, the operation of the radio base station eNB according to the present embodiment will be described with reference to Fig. 5.

As illustrated in Fig. 5, in step S201, the radio base station eNB determines to modify the TAG, to which the Scell #2 of the mobile station UE belongs, from TAG #2 to TAG #1.

In step S202, the radio base station eNB deactivates the Scell #2 before instructing the mobile station UE to modify the TAG, to which the Scell #2 belongs, from TAG #2 to TAG #1.

Incidentally, after completing the above-described modification procedure, that is, after receiving the "RRC Connection Reconfiguration Complete" from the mobile station UE, the radio base station eNB may, if necessary, activate the Scell #2 using control information of a MAC layer.

Alternatively, in step 5202, when instructing the mobile station UE to modify the TAG, to which the Scell #2 belongs, from TAG #2 to TAG #1, the radio base station eNB instructs the mobile station UE to perform handover.

Alternatively, in step S202, when instructing the mobile station UE to modify the TAG, to which the Scell #2 belongs, from TAG#2 to TAG #1, the radio base station eNB stops scheduling in the Scell #2.

According to the mobile communication system of the present embodiment, while the procedure of modifying the TAG, to which the Scell #2 belongs, from TAG #2 to TAG #1 is performed, it is possible to avoid a situation where the radio base station eNB cannot receive the uplink signal from the mobile station UE in the Scell #2, and such an uplink signal becomes interference with respect to another uplink signal, which is occurred as a result of using different TA values, TAT, and "DL Timing Reference Cell" between the mobile station UE and the radio base station eNB upon transmission and reception of the uplink signal in the Scell #2.

The features of the present embodiments described above may also be expressed as follows.

According to a first feature of the present embodiment, there is provided a mobile station UE, which is configured to be capable of performing a CA (carrier aggregation) using a Pcell (primary cell) and a Scell (secondary cell), the mobile station UE including: a control unit 12 configured to deactivate Scell #2 when it is instructed to modify a TAG (timing advance group), to which Scell #2 (target secondary cell) belongs, from TAG #2 (first timing advance group) to TAG #1 (second timing advance group).

According to a second feature of the present embodiment, there is provided a mobile station UE, which is configured to be capable of performing a CA using Pcell and Scell, the mobile station UE including: a transmission unit 13 configured such that an uplink signal is not transmitted in Scell belonging to a TAG in which a TAT (time alignment timer) is stopped; and a control unit 12 configured to stop a TAT of at least one of TAG #1 and TAG #2 when it is instructed to modify a TAG, to which Scell #2 belongs, from the TAG #2 to the TAG #1.

According to a third feature of the present embodiment, there is provided a radio base station eNB, which is used in a mobile communication system configured such that a mobile station UE is capable of performing a CA using Pcell and Scell, the radio base station eNB including: a control unit 21 configured to deactivate Scell #2 before instructing the mobile station UE to modify a TAG, to which the Scell #2 belongs, from TAG #2 to TAG #1.

According to a fourth feature of the present embodiment, there is provided a radio base station eNB, which is used in a mobile communication system configured such that a mobile station UE is capable of performing a CA using Pcell and Scell, the radio base station eNB including: a control unit 21 configured to instruct the mobile station UE to perform handover when instructing the mobile station UE to modify a TAG, to which the Scell #2 belongs, from TAG #2 to TAG #1.

According to a fifth feature of the present embodiment, there is provided a radio base station eNB, which is used in a mobile communication system configured such that a mobile station UE is capable of performing a CA using Pcell and Scell, the radio base station eNB including: a control unit 21 configured to stop scheduling in Scell #2 when instructing the mobile station UE to modify a TAG, to which the Scell #2 belongs, from TAG #2 to TAG #1.

In the fifth feature of the present embodiment, the control unit 21 may be configured to deconfigure SRS transmitted by the mobile station UE prior to the instruction described above.

According to a sixth feature of the present embodiment, there is provided a mobile station UE, which is configured to be capable of performing a CA using Pcell and Scell, the mobile station UE including: a control unit 12 configured to stop uplink transmission in Scell #2 when it is instructed to modify a TAG, to which the Scell #2 belongs, from TAG #2 to TAG #1.

Incidentally, the operation of the mobile station UE and the radio base station eNB described above may be implemented by hardware, may be implemented by a software module that is executed by a processor, or may be implemented by a combination of the hardware and the software module.

The software module may be provided in any type of storage medium, such as a Random Access Memory (RAM), a flash memory, a Read Only Memory (ROM), an Erasable Programmable ROM (EPROM), an Electronically Erasable and Programmable ROM (EEPROM), a register, a hard disk, a removable disk, or a CD-ROM.

Such a storage medium is connected to the processor so that the processor can read and write information from and to the storage medium. Also, such a storage medium may be integrated into the processor. Furthermore, the storage medium and the processor may be provided inside an ASIC. The ASIC may be provided in the mobile station UE or the radio base station eNB. Moreover, the storage medium and the processor may be provided in the mobile station UE and the radio base station eNB as discrete components.

While the present invention has been described in detail with reference to the above-described embodiments, it is apparent to those skilled in the art that the present invention is not limited to the embodiments described in this specification. Furthermore, various changes and modifications can be made without departing from the spirit and scope of the invention as defined by the appended claims. Therefore, the descriptions of the present specification are intended for illustrative purposes and have no restrictive meaning for the present invention.

Incidentally, all contents in Japanese Patent Application No. 2012-108515 (filed on May 10, 2012) are incorporated herein by reference.

### Industrial Applicability

As described above, the present invention can provide a mobile station and a radio base station which are capable of solving the above-described problems in a procedure of modifying the mapping of TAG and Scell.

### Reference Signs List

- UE: Mobile station
- eNB: Radio base station
- 11, 23: Reception unit
- 12, 21: Control unit
- 13, 22: Transmission unit

## Claims

1. A mobile station, which is configured to be capable of performing carrier aggregation using a primary cell and a secondary cell, the mobile station comprising:
a control unit configured to deactivate a target secondary cell when it is instructed to modify a timing advance group, to which the target secondary cell belongs, from a first timing advance group to a second timing advance group.

2. A mobile station, which is configured to be capable of performing carrier aggregation using a primary cell and a secondary cell, the mobile station comprising:
a transmission unit configured such that an uplink signal is not transmitted in a secondary cell belonging to a timing advance group in which a time alignment timer is stopped; and
a control unit configured to stop a time alignment timer of at least one of a first timing advance group and a second timing advance group when it is instructed to modify a timing advance group, to which a target secondary cell belongs, from the first timing advance group to the second timing advance group.

3. A radio base station, which is used in a mobile communication system configured such that a mobile station is capable of performing carrier aggregation using a primary cell and a secondary cell, the radio base station comprising:
a control unit configured to deactivate a target secondary cell before instructing the mobile station to modify a timing advance group, to which the target secondary cell belongs, from a first timing advance group to a second timing advance group.

4. A radio base station, which is used in a mobile communication system configured such that a mobile station is capable of performing carrier aggregation using a primary cell and a secondary cell, the radio base station comprising:
a control unit configured to instruct the mobile station to perform handover when instructing the mobile station to modify a timing advance group, to which a target secondary cell belongs, from a first timing advance group to a second timing advance group.

5. A radio base station, which is used in a mobile communication system configured such that a mobile station is capable of performing carrier aggregation using a primary cell and a secondary cell, the radio base station comprising:
a control unit configured to stop scheduling in a target secondary cell when instructing the mobile station to modify a timing advance group, to which the target secondary cell belongs, from a first timing advance group to a second timing advance group.

6. The radio base station according to claim 5, wherein the control unit is configured to deconfigure SRS transmitted by the mobile station prior to the instruction.

7. A mobile station, which is configured to be capable of performing carrier aggregation using a primary cell and a secondary cell, the mobile station comprising:
a control unit configured to stop uplink transmission in a target secondary cell when it is instructed to modify a timing advance group, to which the target secondary cell belongs, from a first timing advance group to a second timing advance group.
